(19) Europäisches Patentamt
European Patent Office
Office européen des brevets

(11) **EP 4 010 215 B1**

(12) **EUROPÄISCHE PATENTSCHRIFT**

(45) Veröffentlichungstag und Bekanntmachung des Hinweises auf die Patenterteilung:
**27.09.2023   Patentblatt 2023/39**

(21) Anmeldenummer: **20764023.6**

(22) Anmeldetag: **13.08.2020**

(51) Internationale Patentklassifikation (IPC):
**B60L 50/15** (2019.01)      **B60L 15/20** (2006.01)
**B60L 58/10** (2019.01)      **B60L 7/10** (2006.01)
**B60L 50/61** (2019.01)      **B60K 6/28** (2007.10)
**B60L 50/53** (2019.01)      **B60L 58/13** (2019.01)
**B60W 20/13** (2016.01)      **B60W 20/15** (2016.01)
**B61C 3/02** (2006.01)

(52) Gemeinsame Patentklassifikation (CPC):
**B60L 50/15; B60L 7/10; B60L 15/2045;**
**B60L 50/53; B60L 50/61; B60L 58/10; B60L 58/13;**
B60L 2200/26; Y02T 10/62; Y02T 10/70;
Y02T 10/72

(86) Internationale Anmeldenummer:
**PCT/EP2020/072774**

(87) Internationale Veröffentlichungsnummer:
**WO 2021/058195 (01.04.2021 Gazette 2021/13)**

(54) **VERFAHREN ZUM BETREIBEN EINES SCHIENENFAHRZEUGS UND SCHIENENFAHRZEUG**

METHOD FOR OPERATING A RAIL VEHICLE AND RAIL VEHICLE

PROCÉDÉ DE FONCTIONNEMENT D'UN VÉHICULE FERROVIAIRE ET VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2019   DE 102019214918**

(43) Veröffentlichungstag der Anmeldung:
**15.06.2022   Patentblatt 2022/24**

(73) Patentinhaber: **Siemens Mobility GmbH**
**81739 München (DE)**

(72) Erfinder:
• **MELZER, Michael**
  **91207 Lauf an der Pegnitz (DE)**
• **FISCHPERER, Rolf**
  **91338 Igensdorf (DE)**
• **MEINERT, Michael**
  **91056 Erlangen (DE)**

(74) Vertreter: **Siemens Patent Attorneys**
**Postfach 22 16 34**
**80506 München (DE)**

(56) Entgegenhaltungen:
**DE-A1- 10 204 215      DE-A1-102008 050 737**
**DE-C1- 19 700 893      US-A1- 2005 279 242**
**US-B1- 6 230 496**

**Beschreibung**

Die Erfindung betrifft ein Verfahren zum Betreiben eines Schienenfahrzeugs und ein Schienenfahrzeug.

In Schienenfahrzeugen befinden sich fahrzeugseitig elektrische Energiespeicher mit welchen u.a. Traktionsenergie speicherbar ist. Insbesondere bei einem Betrieb von Schienenfahrzeugen, der durch einen häufigen Wechsel von Beschleunigungs- und Bremsvorgängen gekennzeichnet ist, kommen Energiespeicherlösungen zum Einsatz, da mit deren Hilfe die Bremsenergie mittels Rekuperation, bei der kinetische in elektrische Energie umgewandelt wird, nahezu vollständig genutzt werden kann. Die Energiespeicher ermöglichen dadurch einen autonomen Betrieb auf kurzen Streckenabschnitten ohne weitere bordeigene Energiequellen oder Oberleitungsversorgung bzw. stellen vorübergehend eine geringere Stromaufnahme aus dem Fahrdraht sicher.

Solche Energiespeicher werden im laufenden Betrieb im permanenten Wechsel aufgeladen und wieder entladen.

Aus der DE 102 04215 A1 ist ein Fahrzeug, insbesondere Schienenfahrzeug, bekannt, welches mit einer Energieversorgungseinrichtung, einer damit verbundenen elektrischen Antriebseinrichtung und einer, mit der Antriebseinrichtung verbundenen Energiespeichereinrichtung zum Speichern von Bremsenergie in einer Bremsphase des Fahrzeugs und zum Abgeben der gespeicherten Energie an die Antriebseinrichtung in einer Beschleunigungsphase des Fahrzeugs ausgestattet ist.

Aus DE 10 2008 050 737 A1 ist ein Verfahren zum Betrieb eines Fahrzeugs mit Hybridantrieb bekannt, bei welchem abhängig von zum Beispiel der momentanen Geschwindigkeit auf eine bevorstehende Geschwindigkeitsänderung geschlossen wird. Der Soll-Ladezustand des elektrischen Energiespeichers wird entsprechend bestimmt. Abhängig von diesem Soll-Ladezustand wird dann der Betriebszustand, .d.h. der Lade- bzw. Entladevorgang festgelegt.

Der Einsatz von Energiespeichern in Antriebsanwendungen im laufenden Betrieb, z.B. in Schienenfahrzeugen, insbesondere zum Sparen bzw. Rekuperieren von Energie insbesondere Traktions- und/oder Bremsenergie bringt Herausforderungen bezüglich deren Leistungsmanagement mit sich, da sie meist parallel neben anderen Energiequellen betrieben werden.

Beispielsweise tritt bei Energiespeichern in Form von Doppelschichtkondensatoren das Problem auf, dass bei leerem Energiespeicher die Leistungsfähigkeit aufgrund einer Strombegrenzung und kleiner Spannung eingeschränkt ist. Ist aber abzusehen, dass in der nächsten Ladephase nicht genügend Energie bereitsteht, um den Energiespeicher vollständig zu laden, ist eine tiefe Entladung im Voraus nachteilig, da dies die Aufnahmefähigkeit zusätzlich vermindert und eventuell anfallende hohe Bremsleistungen nicht verwertet werden können. Die dadurch nicht genutzte Energie kann in der Regel nicht verwendet werden und wird anderweitig beispielsweise in Wärme umgewandelt und geht "verloren".

Der Erfindung liegt die Aufgabe zugrunde, ein Verfahren anzugeben, mit welchem der Energiespeicher eines Schienenfahrzeugs so optimal eingesetzt werden kann, um die zu erwartende Energie, insbesondere aus Bremsvorgängen, möglichst vollständig aufzunehmen.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dabei ist mit dem erfindungsgemäßen Verfahren zum Betreiben eines Schienenfahrzeugs, welches wenigstens einen elektrischen Energiespeicher (ES) zur Speicherung von Energie aufweist, die Entladeleistung des ES während des Betriebs des Schienenfahrzeugs einstellbar, wobei die Entladeleistung durch einen Vergleich eines Ist-Ladezustandes mit einem Soll-Ladezustand des ES in Abhängigkeit eines energetischen Zustands des Schienenfahrzeugs eingestellt wird.

Die erfindungsgemäße Lösung hat den Vorteil, dass mittels des Vergleichs eines Ist-Ladezustandes mit dem entsprechenden Soll-Ladezustand des Energiespeichers in Abhängigkeit des energetischen Zustands des Schienenfahrzeugs ableitbar ist, ob Energie aus dem oder den Energiespeichern entnommen werden soll, dass also mittels des Verfahrens entschieden werden kann, wann Energie aus einem oder mehreren Energiespeichern, bzw. aus einer alternativen Energiequelle (z.B. Fahrleitung, Dieselmotor, etc.) des Schienenfahrzeugs bezogen werden soll, um zu ermöglichen, dass ein oder mehrere Energiespeicher des Schienenfahrzeugs die zukünftig wieder zu erwartende Energie, insbesondere aus Bremsvorgängen, möglichst vollständig aufnehmen, bzw. speichern zu können.

Erfindungsgemäß ist der energetische Zustand des Schienenfahrzeugs durch wenigstens eine Zustandsgröße bestimmbar, wobei die wenigstens eine Zustandsgröße ein Energieäquivalent des Schienenfahrzeugs ist.

Dabei ist besonders bevorzugt ein Energieäquivalent die Geschwindigkeit des Schienenfahrzeugs, da diese besonders einfach zu bestimmen, bzw. zu messen ist. Die Geschwindigkeit des Schienenfahrzeugs ist ein Maß für dessen kinetische Energie und somit für den energetischen Zustand des Schienenfahrzeugs. Im Folgenden wird deshalb in der Regel die Geschwindigkeit repräsentativ für diesen energetischen Zustand verwendet, wobei dies aber gleichwertig auch für andere Zustandsgrößen, insbesondere andere Energieäquivalente, wie z.B. Drehzahl, Winkelgeschwindigkeit, Höhenlage, Beladung, etc. gilt.

Erfindungsgemäß ist der Soll-Ladezustand des Energiespeichers in Abhängigkeit wenigstens eines Energieäquivalents bestimmbar, wobei eine daraus resultierende Soll-Ladezustandskurve eine Funktion des wenigstens einen Energieäquivalents des Schienenfahrzeugs ist.

Der Ladezustand eines Energiespeichers kann durch unterschiedliche Zustandsgrößen repräsentiert werden. Beispiele hierfür sind kumulierte Ladungsmengen, Spannungen, Drehzahlen etc. Im Folgenden wird in der Regel die Spannung als besonders bevorzugtes Ladezustandsäquivalent verwendet, da die Spannung ebenfalls sehr einfach und sehr genau bestimmbar ist, wobei jedoch ohne Einschränkung auch jede andere Ladezustandsgröße, bzw. jedes andere Ladezustandsäquivalent hierfür verwendet werden kann.

Somit wird erfindungsgemäß ein vordefinierter Soll-Ladezustand des Energiespeichers also eine Spannung, bzw. ein Spannungswert, in Abhängigkeit des jeweiligen energetischen Zustands des Fahrzeugs, also eines Energieäquivalents, wie insbesondere der Geschwindigkeit bestimmt, wodurch eine entsprechende Soll-Ladezustandskurve abgebildet werden kann. Die Soll-Ladezustandskurve U ist demnach eine Funktion der betreffenden Zustandsgröße, bzw. des betreffenden Energieäquivalents Geschwindigkeit v: U=f(v).

Nach einer bevorzugten Ausführungsform der Erfindung entspricht eine Soll-Ladezustandskurve einem Betriebsprofil des Schienenfahrzeugs, wobei jeweils unterschiedliche Betriebsprofile jeweils unterschiedlichen Soll-Ladezustandskurven entsprechen. Besonders bevorzugt werden die unterschiedlichen Soll-Ladezustandskurven in einem Datenspeicher hinterlegt, so dass diese jederzeit, wenn benötigt, abgerufen, bzw. ausgelesen werden können und somit jederzeit zur Verfügung stehen. Somit können für alle denkbaren Situationen Betriebsprofile des Schienenfahrzeugs als jeweils zugehörige Soll-Ladezustandskurven insbesondere im Voraus, also vordefiniert, abgebildet und gespeichert werden, wobei diese sowohl ortsabhängig als auch allgemein gültig hinterlegt werden können.

Nach einer weiteren bevorzugten Ausführungsform der Erfindung ist mittels des Vergleichs des Ist-Ladezustandes mit dem Soll-Ladezustand des ES in Abhängigkeit des energetischen Zustands des Schienenfahrzeugs eine Entladesollleistung ableitbar. Besonders bevorzugt ist die Entladesollleistung zu einer geregelten Energieentnahme aus dem ES des Schienenfahrzeugs verwendbar, wobei dies besonders bevorzugt mittels einer geregelten Stromentnahme erfolgt, die wiederum besonders bevorzugt zum Beschleunigen des Schienenfahrzeugs verwendbar ist.

Die erfindungsgemäße Einstellung der Entladeleistung, insbesondere die Bestimmung der jeweiligen Entladesollleistung, eines Energiespeichers erfolgt geregelt durch den Abgleich des aktuellen Ist-Ladezustands mit dem entsprechenden, vordefinierten Soll-Ladezustand des Energiespeichers in Abhängigkeit des zugehörigen energetischen Zustands des Fahrzeugs. So kann beispielsweise die Spannung als Maß für den Ladezustand des Energiespeichers in Abhängigkeit der Geschwindigkeit des Schienenfahrzeugs geregelt werden. Die gemessene Geschwindigkeit ergibt zusammen mit der hinterlegten Sollkurve des Ladezustands U=f(v) einen Sollwert der Spannung $U_{soll}$. Davon wird der gemessene Wert der Spannung des Energiespeichers $U_{ist}$ subtrahiert, woraus sich ggf. eine Regelabweichung ergibt, welche in einem hierfür angeschlossenem Regelkreislauf mittels eines entsprechenden Reglers, beispielsweise einem PI-Regler, in eine Entladesollleistung umgewandelt wird. Eine Entladeleistung kann beispielsweise und besonders vorteilhaft durch einen Entladestrom repräsentiert werden, sodass die, aufgrund des vorher beschriebenen Vergleichs bestimmte Entladesollleistung einem Soll-Entladestrom $I_{soll}$ entspricht. Dies wiederum führt in der Regelstrecke beim Schienenfahrzeug zu einer geregelten Stromentnahme $I_{ist}$ aus dem Energiespeicher in dem Maße, in dem diese hierdurch repräsentierte Energie verwendet werden kann und soll, z.B. und besonders vorteilhaft zum Beschleunigen des Schienenfahrzeugs, da dadurch keine alternativen Energiequellen benötigt werden. Optional ist es hier auch möglich eine Begrenzung des Entladestroms vorzusehen, um beispielsweise eine Tiefenentladung des oder der Energiespeicher zu vermeiden. Die resultierende, bzw. zu entnehmende Entladeleistung wiederum beeinflusst mittels Beschleunigung und der daraus resultierenden, geänderten Geschwindigkeit des Schienenfahrzeugs die Regelstrecke und führt somit zu einer Rückkopplung der Regelung.

Nach einer weiteren besonders bevorzugten Ausführungsform der Erfindung ist die Soll-Ladezustandskurve eine Funktion des wenigstens einen Energieäquivalents des Schienenfahrzeugs und wenigstens einer Störgröße. Dabei ist die Soll-Ladezustandskurve besonders bevorzugt in Abhängigkeit eines definierten Soll-Ladezustands des Energiespeichers bei einer definierten Geschwindigkeit des Schienenfahrzeugs anpassbar.

Somit können mittels des erfindungsgemäßen Verfahrens Störgrößen entsprechend vorteilhaft bei der Bestimmung der Soll-Ladezustandskurve berücksichtigt werden. Störgrößen sind Einflüsse, die den energetischen Zustand des Schienenfahrzeuges beeinflussen können, jedoch größtenteils nicht bekannt sind. Sind einzelne oder mehrere Störgrößen, wie beispielsweise die Fahrweise getriggert durch den Fahrer, bzw. Zugführer, Zuladung ($m_{Zul}$), Witterungsbedingungen (T), Hilfsbetriebe ($P_{HBU}$), Position (x,y), Fahrtrichtung (d), etc. messtechnisch erfassbar, kann der Soll-Ladezustand und somit die entsprechende Soll-Ladezustands-kurve nicht nur in Abhängigkeit eines energetischen Zustands des Fahrzeugs, wie z.B. der Geschwindigkeit v, sondern auch in einer ein- oder auch mehrdimensionalen Abhängigkeit abgebildet werden, so dass beispielsweise eine Funktion U(v, Fahrer, $m_{Zul}$, T, $P_{HBU}$, x,y, d) betrachtet und somit entsprechend wenigstens eine oder auch mehrere Störgrößen berücksichtigt werden können. Die mathematische Beschreibung des Einflusses einer oder mehrerer Störgröße(n) auf den Soll-Ladezustandswert ist sehr komplex und aufwändig. Die dabei auftretende Komplexität der Zusammenhänge kann zum Beispiel durch den Einsatz von maschinellem Lernen, künstlicher Intelligenz, neuronalen Netzwerken, etc. gelöst werden. Wird etwa maschinelles Lernen eingesetzt, könnte anhand der vergangenen zeitlichen Verläufe der erfassten Zustände eine Prognose für die anfallende Ladeleistung und Energie beim Bremsen gemacht werden und daraus ein Soll-Ladezustandswert abgeleitet werden. Der Vorteil des maschinellen Lernens liegt insbesondere darin, dass der Einfluss der Störgrößen verkleinert wird und die Notwendigkeit der mathematischen Beschreibung der Wirkung der Störgrößen auf den Soll-Ladezustandswert entfallen kann. Je mehr Störgrößen messtechnisch erfasst werden, desto geringer ist die Notwendigkeit für einen gezielten Umgang mit den Störgrößen, wie dies bei einfachen zustandsbasierten Regelungen der Entladeleistung der Fall ist. Insbesondere ist es vorteilhaft abhängig vom Ort, bzw. einer Haltestelle des Schienenfahrzeugs bereits vorhersehbare Störgrö-ßen, wie z.B. Änderungen der Höhenlage oder Energieverbrauch, etc. durch besondere Fahrwiderstände, wie z. B. Kurvenradien, etc. in der entsprechenden Soll-Ladezustandskurve, also der U(v)-Kennlinie, zu berücksichtigen.

Für einfache zustandsbasierte Regelungen der Entladeleistung ist eine Kompensation der Störgrößen zwar nicht zwingend notwendig, aber dennoch sinnvoll.

Dabei ist eine entsprechende Berücksichtigung einer oder mehrerer Störgrößen durch eine Anpassung der Soll-Ladezustandskurve erfindungsgemäß besonders bevorzugt in Abhängigkeit eines definierten Soll-Ladezustands des Energiespeichers bei einer definierten Geschwindigkeit des Schienenfahrzeugs.

Hierfür werden im Folgenden beispielsweise zwei Möglichkeiten zum Umgang mit Störgrößen dargestellt.

Auf Grund von Störgrößen werden die Vorhersagen einer vordefinierten Soll-Ladezustandskurve möglicherweise von der Realität abweichen, sodass die, ein oder mehrere, Energiespeicher beim nächsten Ladevorgang, insbesondere Bremsvorgang des Schienenfahrzeugs, entweder nicht vollständig geladen werden können, weil im Vorfeld zu viel Energie entnommen und somit verloren wurde, oder bereits verfrüht vollständig aufgeladen sind, weil sie vorher nicht tief genug entladen wurden und somit ein Teil der Energie, beispielsweise über Wärmeabstrahlung verloren geht. Dementsprechend ist es vorteilhaft eine übergeordnete Regelung zur Adaption der entsprechenden Kennlinie des Ladezustands, also der Soll-Ladezustandskurve zu integrieren.

So wird erfindungsgemäß, bei Erreichen einer definierten Geschwindigkeit, der Referenzgeschwindigkeit $v_{Ref}$, z.B. bei Stillstand, also v=0, der aktuelle Ladezustand U vom Sollwert des zugehörigen Ladezustands, also des zur Referenzgeschwindigkeit $v_{Ref}$ gehörenden Referenzladezustands $U_{Ref}$, abgezogen. Die resultierende Abweichung wird im Anschluss mittels eines Reglers, beispielsweise eines PI-Reglers, verarbeitet, wobei am Ausgang des Reglers beispielsweise eine geschwindigkeitsabhängige Funktion m(v) definiert wird und die resultierende Größe dabei der mathematischen Anpassung der Sollkurve beispielsweise nach folgendem mathematischem Muster dient:

$$m(v) = 1 + (m_n \ast v/v_{max})$$

Die geschwindigkeitsabhängige Funktion m(v) wird nun beispielsweise mit der Sollwertkurve U(v) multipliziert und ergibt somit U(v) x m(v), wodurch die Anpassung der Soll-Ladezustandskurve basierend auf der Erreichung eines definierten Sollladezustands bei einer definierten Geschwindigkeit erreicht wird. Dies führt somit zu einer Adaption des geschwindigkeitsabhängigen Sollwerts des Ladezustands und somit der Soll-Ladezustandskurve U(v).

Nach einer weiteren besonders bevorzugten Ausführungsform der Erfindung ist die Steilheit der Soll-Ladezustandskurve in Abhängigkeit einer definierten Geschwindigkeit des Schienenfahrzeugs anpassbar.

So erfolgt beim Erreichen einer definierten Geschwindigkeit, beispielsweise bei v=O, eine Überprüfung der erreichten Energieeinsparung im Vergleich zum Sollwert, z.B., wie folgt:

a) Sollwert $dU_{soll} = U_{max} - U_{min}$ mit $U_{max}$ = maximale Energiespeicherspannung, d.h. maximaler Ladezustand, der Energiespeicher ist vollständig geladen, und $U_{min}$ = minimale projektierte Speicherspannung, d.h. minimaler Ladezustand, der Energiespeicher ist "leer", also entladen.

b) Istwert $dU_{ist} = U_{ist,min} - U_{ende}$, mit $U_{ist,min}$ = kleinste erreichte Spannung im betrachteten Intervall und $U_{ende}$ = erreichte Spannung nach dem Laden des Energiespeichers durch den Bremsvorgang nach Erreichen der definierten Geschwindigkeit v=0.

Der entsprechende Istwert des Ladezustands $dU_{ist}$ kann nie größer werden als der Sollwert $dU_{soll}$.

Beim Vergleich von Istwert mit dem Sollwert können sich folgende Fälle ergeben:
Falls der Istwert gleich dem Sollwert ist, also $dU_{ist} = dU_{soll}$ ist keine weitere Maßnahme erforderlich, da die erzielte Energieeinsparung bereits optimal ist.

Falls $U_{ende} < U_{max}$ ist, bedeutet das, dass die optimale Energieeinsparung nicht erzielt worden ist, weil der Energiespeicher durch den Bremsvorgang nicht wieder vollständig geladen werden konnte, da er vorher zu tief entladen worden ist. Dementsprechend muss der Entladestrom entsprechend reduziert werden.

Mögliche Ursachen sind beispielsweise, dass 1. zu viel Bremsleistung in zu kurzer Zeit zur Verfügung steht, weshalb eine Ladestrombegrenzung wirksam wird, wodurch die Bremsenergie nicht aufgenommen werden kann, oder, dass 2. nicht genügend Bremsenergie zum Laden des Energiespeichers zur Verfügung steht, z.B. aufgrund von Störgrößen.

Konsequenz:

- In der Designphase: Überprüfung der Speicherauslegung: Mehr Leistung, weniger Energie.
- In der Betriebsphase: Das Entladen sollte verringert werden, damit mit vollständiger Aufnahme der Bremsenergie auch der Energiespeicher möglichst vollständig geladen werden kann.

Um dies zu berücksichtigen, kann insbesondere die Steilheit der Soll-Ladezustandskurve, also der Kennlinie U=f(v) erhöht werden.

Falls $U_{ende} = U_{max}$ und $U_{ist,min} > U_{min}$ bedeutet das, dass die optimale Energieeinsparung nicht erzielt worden ist, weil der Energiespeicher vorher nicht tief genug entladen wurde.

Mögliche Ursachen sind beispielsweise, dass

1. der Sollentladestrom durch den Maximalwert begrenzt wird oder, dass
2. die Energieaufnahme des Schienenfahrzeugs geringer als projektiert ist, z.B. aufgrund von Störgrößen.

Konsequenz:

- In der Designphase: Überprüfung der Speicherauslegung: Mehr Leistung, weniger Energie.
- In der Betriebsphase: Das Entladen sollte schon bei kleinen Geschwindigkeiten erhöht werden, damit mehr Energie im Energiespeicher umgesetzt werden kann.

Um dies zu berücksichtigen, kann insbesondere die Steilheit der Soll-Ladezustandskurve, also der Kennlinie U=f(v) erniedrigt werden.

Eine weitere besonders bevorzugte Ausprägung der Erfindung ist ein Schienenfahrzeug mit Mitteln zur Durchführung des Verfahrens nach einem der Ansprüche 1 bis 11.

Zusammengefasst kann mit dem erfindungsgemäßen Verfahren gegenüber herkömmlichen Entladeregelungen bzw. Verfahren aus dem Stand der Technik gewährleistet werden, dass ein oder mehrere Energiespeicher eines Schienenfahrzeugs durch rekuperativ anfallende Energie bestmöglich geladen werden können, ohne dabei in gesteigertem Maß nicht aufnahmefähig zu sein, bzw. bereits vollständig geladen zu sein, trotz zusätzlich vorhandener rekuperativer Energie. Dies ist insbesondere besonders vorteilhaft bei Energiespeichern mit ladezustandsabhängiger Leistung, wie zum Beispiel Doppelschichtkondensatoren, Schwungmassenspeichern, aber auch Batterien. Ein weiterer Vorteil des erfindungsgemäßen Verfahrens ist, dass sich dieses, insbesondere sich die zugehörige Regelung automatisch auf Störgrößen adaptiert, die meist nicht oder nur unzureichend erfasst werden können und damit einem optimalen Energiespeichereinsatz in der Regel entgegenstehen. Die Adaption eignet sich besonders für langsam veränderliche Störgrößen, die sich über mehrere Lade-/ Entladezyklen langsam verändern. Hingegen kann die innere Regelung sehr schnell auf Veränderungen reagieren. Unabhängig von der Art der Störgröße reagiert die Adaption. Indirekt reagiert die Adaption sogar automatisch auf die Alterung des Energiespeichers, wenn sich dessen Energieinhalt und/oder Leistungsvermögen ändern. In der Regel sind bereits viele notwendige Größen bekannt und müssen nur verarbeitet werden. Zusätzliche Sensorik wird damit weitestgehend vermieden. Beim Einsatz von maschinellem Lernen entfällt die mathematische/physikalische Beschreibung des Einflusses der Störgrößen auf den Ladezustandssollwert und vereinfacht somit das Engineering.

Weiterhin bietet die adaptive zustandsbasierte Entladeregelung des Energiespeichers, z.B. beim Einsatz für Doppelschichtkondensatoren, mehrere Vorteile in Bezug auf Effektivwert des Speicherstroms, Verlustverhalten, Thermik, Alterung, Komponentendimensionierung, Energieinhalt des Energiespeichers, Kühlsystemgröße und Energieverbrauch. Die verwendete Entladeregelung führt zu einem Betrieb bei höheren mittleren Spannungen der Doppelschichtkondensatoren, wobei die oberen und unteren Grenzen unangetastet bleiben. Durch den Betrieb bei höheren Spannungen werden bei gleicher Leistung geringere Ströme benötigt, was geringere Effektivwerte der Ströme hervorruft, die wiederum geringere ohmsche Verluste in Stromrichter, Drossel und Energiespeicher nach sich ziehen. Geringere Verluste verbessern das thermische Verhalten der Komponenten und ermöglichen einen Einsatz bei wärmeren Umgebungsbedingungen oder mit geringerem Aufwand für die Kühlung der Komponenten. Die geringeren Verluste tragen zu einer Steigerung der Energieeffizienz bei und reduzieren den Energiebedarf. Die hervorgerufene Verbesserung des Effektivwerts des Stroms könnte auch dazu verwendet werden, niedrigere Schwellen für den minimalen Ladezustand des Energiespeichers zuzulassen, die aufgrund der Regelung beispielsweise nur in langen Bergabfahrten zum Tragen kommen. Der oder die Energiespeicher könnten somit einen größeren Teil ihres theoretischen Energieinhalts nutzen, was eine bessere Ausnutzung und höhere Energieeffizienz hervorruft.

Eine zusätzliche Möglichkeit besteht in einer Überdimensionierung (hohe Energieaufnahme, aber hohe Investkosten) oder Unterdimensionierung (billig, aber Energie nur teilweise rekuperierbar) der Energiespeicher.

Im Weiteren werden bevorzugte Ausführungsbeispiele der Erfindung mit Bezugnahme auf die Zeichnungen näher erläutert. Es zeigen:

Fig. 1 ein Ersatzschaltbild für eine zustandsbasierte Regelung der Entladeleistung,
Fig. 2 ein Ersatzschaltbild für eine Energieregelung bei einer Referenzgeschwindigkeit und
Fig. 3 bis 6 Diagramme zur Speicherleistung bzw. Energie in Bezug zu einer adaptierten Soll-Ladezustandskurve.

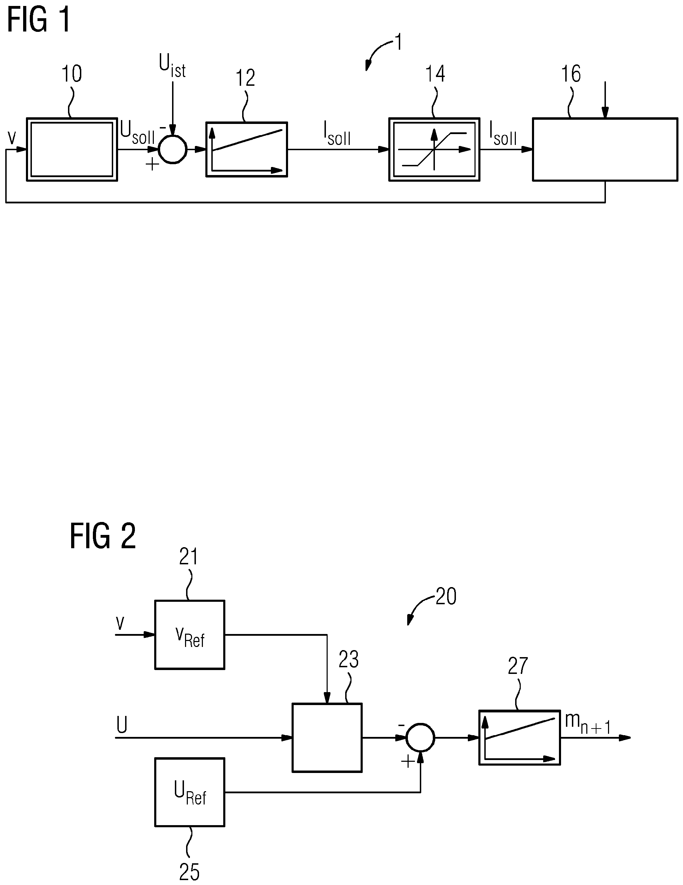

Fig.1 zeigt ein Ersatzschaltbild für eine zustandsbasierte Regelung 1 der Entladeleistung.

Die Einstellung der Entladeleistung eines Energiespeichers erfolgt geregelt durch den Abgleich eines aktuellen Ist-Ladezustands mit einem vordefinierten Soll-Ladezustand des Energiespeichers in Abhängigkeit eines energetischen Zustands eines Schienenfahrzeugs, insbesondere der Geschwindigkeit eines Schienenfahrzeugs, welches ein Maß für die kinetische Energie und somit den energetischen Zustand des Schienenfahrzeugs ist. In den Figuren bzw. der Figurenbeschreibung wird deshalb die Geschwindigkeit repräsentativ für diesen energetischen Zustand verwendet, wobei dies aber gleichwertig auch für andere Zustandsgrößen, insbesondere andere Energieäquivalente, wie z.B. Drehzahl, Winkelgeschwindigkeit, Höhenlage, Beladung, etc. gilt.

Dabei zeigt Fig.1 einen Datenspeicher 10, der eine oder mehrere Soll-Ladezustandskurven U(v) enthält. Die Soll-Ladezustandskurven sind beispielsweise Spannungskurven U in Abhängigkeit der Zustandsgröße Geschwindigkeit v. Eine Soll-Ladezustandskurve entspricht einem Betriebsprofil des Schienenfahrzeugs, wobei jeweils unterschiedliche Betriebsprofile jeweils unterschiedlichen Soll-Ladezustandskurven entsprechen. Somit kann für jedes denkbare Betriebsprofil eines Schienenfahrzeugs, ortsabhängig oder allgemein gültig, eine zugehörige Soll-Ladezustandskurve im Datenspeicher 10 hinterlegt werden, so dass diese jederzeit, wenn benötigt, abgerufen, bzw. ausgelesen werden können und somit jederzeit zur Verfügung stehen.

Die gemessene Geschwindigkeit v ergibt zusammen mit der im Datenspeicher 10 hinterlegten Sollkurve des Ladezustands ($U=f(v)$) einen Sollwert der Spannung $U_{soll}$. Davon wird der gemessene Wert der Spannung $U_{ist}$ subtrahiert. Ergibt sich daraus eine Regelabweichung verschieden von 0, wird diese daran anschließend im Regler 12, hier beispielhaft als PI-Regler ausgeführt, in eine Entladesollleistung umgewandelt, wobei diese in der Figur 1 beispielsweise durch den Soll-Entladestrom $I_{soll}$ repräsentiert wird. In einem optionalen Strombegrenzer 14 ist es hier auch möglich, eine Begrenzung des Entladestroms vorzusehen, um beispielsweise eine Tiefenentladung des oder der Energiespeicher zu vermeiden.

Der in Fig.1 dargestellte Sollwert $I_{soll}$ führt im Anschluss in der Regelstrecke 16 also im Schienenfahrzeug zu einer geregelten Stromentnahme $I_{ist}$ (hier nicht dargestellt) aus dem Energiespeicher, beispielsweise zur Beschleunigung des Schienenfahrzeugs. Die resultierende, bzw. zu entnehmende Entladeleistung wiederum beeinflusst mittels Beschleunigung und der daraus resultierenden, geänderten Geschwindigkeit des Schienenfahrzeugs die Regelstrecke und führt somit zu einer Rückkopplung der Regelung. Die Regelstrecke 16 kann dabei zusätzlich durch weitere Zustandsgrößen, insbesondere Störgrößen beeinflusst werden (In Fig. 1 durch einen Pfeil, der in die Regelstrecke 16 zeigt, symbolisiert.

Störgrößen sind Einflüsse, die den energetischen Zustand des Fahrzeuges beeinflussen können, jedoch größtenteils nicht bekannt sind.

Sind einzelne oder mehrere Störgrößen, wie beispielsweise die Fahrweise (Fahrer) getriggert durch den Fahrer, bzw. Zugführer, Zuladung ($m_{Zul}$), Witterungsbedingungen (T), Hilfsbetriebe ($P_{HBU}$), Position (x,y), Fahrtrichtung (d), etc. messtechnisch erfassbar, kann der Soll-Ladezustand und somit die entsprechende Soll-Ladezustandskurve nicht nur in Abhängigkeit eines energetischen Zustands des Fahrzeugs, wie z.B. der Geschwindigkeit v, sondern auch in einer ein- oder auch mehrdimensionalen Abhängigkeit abgebildet werden, so dass beispielsweise eine Funktion U(v, Fahrer, $m_{Zul}$, T, $P_{HBU}$, x,y, d) betrachtet und somit entsprechend wenigstens eine oder auch mehrere Störgrößen berücksichtigt werden können. In den folgenden Figuren wird der Umgang mit Störgrößen beispielhaft dargestellt.

Fig. 2 zeigt hierzu ein Ersatzschaltbild für eine entsprechende Regelung bei einer Referenzgeschwindigkeit.

Auf Grund von oben bereits genannten Störgrößen werden die Vorhersagen einer vordefinierten Soll-Ladezustandskurve möglicherweise von der Realität abweichen, sodass die, ein oder mehrere, Energiespeicher beim nächsten Ladevorgang, insbesondere Bremsvorgang des Schienenfahrzeugs, entweder nicht vollständig geladen werden können, weil im Vorfeld zu viel Energie entnommen und somit verloren wurde, oder bereits verfrüht vollständig aufgeladen sind, weil sie vorher nicht tief genug entladen wurden und somit ein Teil der Energie, beispielsweise über Wärmeabstrahlung verloren geht. Dementsprechend ist es vorteilhaft eine übergeordnete Regelung zur Adaption der entsprechenden Kennlinie des Ladezustands, also der Soll-Ladezustandskurve zu integrieren, wie dies beispielhaft in Fig. 2 dargestellt ist.

Dabei wird bei Erreichen einer definierten Geschwindigkeit, der Referenzgeschwindigkeit $v_{Ref}$, z.B. bei Stillstand, also bei v = 0, mittels des Triggers 21 der aktuelle Ladezustand U 23 vom Sollwert des zugehörigen Ladezustands, also des zur Referenzgeschwindigkeit $v_{Ref}$ gehörenden Referenzladezustands $U_{Ref}$ 25, abgezogen.

Die resultierende Abweichung wird dann mittels eines Reglers 27, hier beispielsweise als PI-Regler ausgeführt, verarbeitet, wobei am Ausgang des Reglers 27 beispielsweise eine geschwindigkeitsabhängige Funktion m(v) definiert wird und die resultierende Größe dabei der mathematischen Anpassung der Sollkurve beispielsweise gemäß folgendem mathematischem Muster dient:

$$m(v) = 1 + (m_n * v/v_{max})$$

Die geschwindigkeitsabhängige Funktion m(v) wird nun beispielsweise mit der Sollwertkurve U(v) multipliziert und ergibt somit U(v) x m(v), wodurch die Anpassung der Soll-Ladezustandskurve basierend auf der Erreichung eines definierten Sollladezustands $U_{Ref}$ 25 bei einer definierten Geschwindigkeit $v_{Ref}$ erreicht wird. Dies führt somit zu einer Adaption des geschwindigkeitsabhängigen Sollwerts des Ladezustands und somit der Soll-Ladezustandskurve U(v).

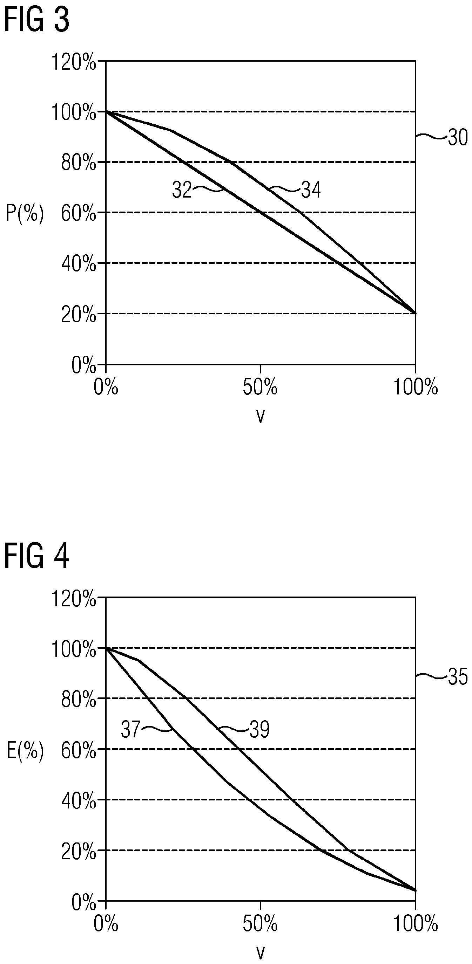

Eine weitere Möglichkeit für den Umgang mit Störgrößen wird beispielhaft anhand der Figuren 3 bis 6 dargestellt.

Fig. 3 bis 6 zeigen hierzu Diagramme zur Speicherleistung 30, 40 bzw. Energie 35, 45 in Bezug zu einer adaptierten Soll-Ladezustandskurve.

So erfolgt beim Erreichen einer definierten Geschwindigkeit, beispielsweise bei v = 0, eine Überprüfung der erreichten Energieeinsparung im Vergleich zum Sollwert, z.B., wie folgt:

a) Sollwert $dU_{soll}$ = $U_{max}$ - $U_{min}$ mit $U_{max}$ = maximale Energiespeicherspannung, d.h. maximaler Ladezustand, der Energiespeicher ist vollständig geladen, und $U_{min}$ = minimale projektierte Speicherspannung, d.h. minimaler Ladezustand, der Energiespeicher ist "leer", also entladen.

b) Istwert $dU_{ist}$ = $U_{ist,min}$ - $U_{ende}$, mit $U_{ist,min}$ = kleinste erreichte Spannung im betrachteten Intervall und $U_{ende}$ = erreichte Spannung nach dem Laden des Energiespeichers durch den Bremsvorgang nach Erreichen der definierten Geschwindigkeit v = 0.

Der entsprechende Istwert des Ladezustands $dU_{ist}$ kann nie größer werden als der Sollwert $dU_{soll}$.

Beim Vergleich vom Istwert mit dem Sollwert des Ladezustands können sich folgende Fälle ergeben:
Falls der Istwert gleich dem Sollwert ist, also $dU_{ist}$ = $dU_{soll}$ ist keine weitere Maßnahme erforderlich, da die erzielte Energieeinsparung bereits optimal ist.

Falls $U_{ende}$ < $U_{max}$ ist, bedeutet das, dass die optimale Energieeinsparung nicht erzielt worden ist, weil der Energiespeicher durch den Bremsvorgang nicht wieder vollständig geladen werden konnte, da er vorher zu tief entladen worden ist. Dementsprechend muss der Entladestrom entsprechend reduziert werden.

Mögliche Ursachen sind beispielsweise, dass 1. zu viel Bremsleistung in zu kurzer Zeit zur Verfügung steht, weshalb eine Ladestrombegrenzung wirksam wird, wodurch die Bremsenergie nicht aufgenommen werden kann, oder, dass 2. nicht genügend Bremsenergie zum Laden des Energiespeichers zur Verfügung steht, z.B. aufgrund von Störgrößen.

Konsequenz:

- In der Designphase: Überprüfung der Speicherauslegung: Mehr Leistung, weniger Energie.
- In der Betriebsphase: Das Entladen sollte verringert werden, damit mit vollständiger Aufnahme der Bremsenergie auch der Energiespeicher möglichst vollständig geladen werden kann.

Um dies zu berücksichtigen, kann insbesondere die Steilheit der Soll-Ladezustandskurve, also der Kennlinie U=f(v) erhöht werden.

Dieser Fall wird in Fig. 3 bzw. 4 abgebildet, wobei Diagramm 30 die Speicherleistung in Abhängigkeit der Geschwindigkeit zeigt, und sowohl Speicherleistung als auch Geschwindigkeit jeweils in % angegeben werden. Entsprechend dazu zeigt Diagramm 35 die Energie in Abhängigkeit der Geschwindigkeit, wobei auch hier sowohl Speicherleistung als auch Geschwindigkeit jeweils in % angegeben werden.

Dabei wird in Diagramm 30 die Kennlinie 32 mit dem normalen Verlauf der Speicherleistung in Abhängigkeit der Geschwindigkeit gemäß der ursprünglichen Soll-Ladezustandskurve im Vergleich zur Kennlinie 34 gezeigt, die den, wie oben erläutert, korrigierten Verlauf der Speicherleistung in Abhängigkeit der Geschwindigkeit gemäß der adaptierten Soll-Ladezustandskurve abbildet. Analog dazu wird in Diagramm 35 die Kennlinie 37 mit dem normalen Verlauf der Energie in Abhängigkeit der Geschwindigkeit gemäß der ursprünglichen Soll-Ladezustandskurve im Vergleich zur Kennlinie 39 gezeigt, die den, wie oben erläutert, korrigierten Verlauf der Energie in Abhängigkeit der Geschwindigkeit gemäß der adaptierten Soll-Ladezustandskurve abbildet.

Wie unmittelbar in den Diagrammen 30 und 35 zu erkennen ist, verlaufen die korrigierten Kennlinien 34 und 39 mit erhöhter Steilheit deutlich oberhalb der entsprechenden, nicht korrigierten Kennlinien 32 und 37.

Die jeweils korrigierten Kennlinien 34 und 39 repräsentieren somit, aufgrund der oben erläuterten Gegebenheiten, die entsprechend adaptierten Soll-Ladezustandskurven, die die ursprünglichen Soll-Ladezustandskurven ersetzen sollen und die wirkliche, reale Situation entsprechend wesentlich besser abbilden können.

Falls $U_{ende} = U_{max}$ und $U_{ist,min} > U_{min}$ bedeutet das, dass die optimale Energieeinsparung nicht erzielt worden ist, weil der Energiespeicher vorher nicht tief genug entladen wurde.

Mögliche Ursachen sind beispielsweise, dass

1. der Sollentladestrom durch den Maximalwert begrenzt wird oder, dass
2. die Energieaufnahme des Schienenfahrzeugs geringer als projektiert ist, z.B. aufgrund von Störgrößen.

Konsequenz:

- In der Designphase: Überprüfung der Speicherauslegung: Mehr Leistung, weniger Energie.
- In der Betriebsphase: Das Entladen sollte schon bei kleinen Geschwindigkeiten erhöht werden, damit mehr Energie im Energiespeicher umgesetzt werden kann.

Um dies zu berücksichtigen, kann insbesondere die Steilheit der Soll-Ladezustandskurve, also der Kennlinie U=f(v) erniedrigt werden.

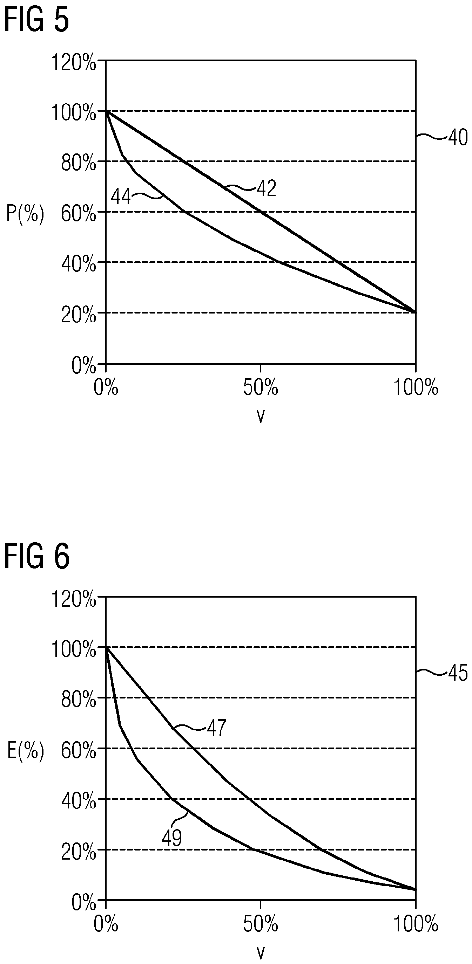

Dieser Fall wird in Fig. 5 bzw. 6 abgebildet, wobei Diagramm 40 die Speicherleistung in Abhängigkeit der Geschwindigkeit zeigt, und sowohl Speicherleistung als auch Geschwindigkeit jeweils in % angegeben werden. Entsprechend dazu zeigt Diagramm 45 die Energie in Abhängigkeit der Geschwindigkeit, wobei auch hier sowohl Speicherleistung als auch Geschwindigkeit jeweils in % angegeben werden.

Dabei wird in Diagramm 40 die Kennlinie 42 mit dem normalen Verlauf der Speicherleistung in Abhängigkeit der Geschwindigkeit gemäß der ursprünglichen Soll-Ladezustandskurve im Vergleich zur Kennlinie 44 gezeigt, die den, wie oben erläutert, korrigierten Verlauf der Speicherleistung in Abhängigkeit der Geschwindigkeit gemäß der adaptierten Soll-Ladezustandskurve abbildet. Analog dazu wird in Diagramm 45 die Kennlinie 47 mit dem normalen Verlauf der Energie in Abhängigkeit der Geschwindigkeit gemäß der ursprünglichen Soll-Ladezustandskurve im Vergleich zur Kennlinie 49 gezeigt, die den, wie oben erläutert, korrigierten Verlauf der Energie in Abhängigkeit der Geschwindigkeit gemäß der adaptierten Soll-Ladezustandskurve abbildet.

Wie unmittelbar in den Diagrammen 40 und 45 zu erkennen ist, verlaufen die korrigierten Kennlinien 44 und 49 mit erniedrigter Steilheit deutlich unterhalb der entsprechenden, nicht korrigierten Kennlinien 42 und 47.

Die jeweils korrigierten Kennlinien 44 und 49 repräsentieren somit, aufgrund der oben erläuterten Gegebenheiten, die entsprechend adaptierten Soll-Ladezustandskurven, die die ursprünglichen Soll-Ladezustandskurven ersetzen sollen und die wirkliche, reale Situation entsprechend wesentlich besser abbilden können.

Zur Bestimmung der Änderung der Steilheit:

- Als Maß M für die erforderliche Nachkorrektur kann die Differenz zwischen erreichter und Soll-Energieeinsparung dienen: $M = (dU_{ist})/(dU_{soll})$.
- Beispiel für eine Leistungskennlinie (linear):

$$P(v) = P_{max} * (1-(1-P_{min}/P_{max})*(v/v_{max})^{EXP}) \text{ mit EXP} = 1$$

- Beispiel für eine überhöhte Kennlinie:

$$P(v) = P_{max} * (1-(1-P_{min}/P_{max})*(v/v_{max})^{1+M})$$

- Beispiel für eine erniedrigte Kennlinie:

$$P(v) = P(v) = P_{max} * (1-(1-P_{min}/P_{max})*(v/v_{max})^{1-M})$$

- Setzt man den Exponent EXP bei jeder neuen Auswertung neu, so kann eine adaptive Regelung und Optimierung der Kennlinie erreicht werden.

- Damit der Exponent konvergiert, und nicht divergiert, kann man beispielsweise ansetzen:

$$\text{EXP}_{neu} = \text{EXP}_{alt} +/- M_{neu} * x \text{ und x hinreichend klein wählen.}$$

Die Energie-Kennlinie ist in diesem Beispiel in den Diagrammen 35 und 45 der Figuren 4 bzw. 6 quadratisch zur Leistungskennlinie angenommen. Dies entspricht einem idealen Kondensatorspeicher mit $E \sim U^2$ und P-U, d.h., U = f(v) entspricht in diesem Beispiel der Leistungskennlinie in den Diagrammen 30 und 40 der Figuren 3 bzw. 5:

$$U(v) = U_{max} * (1 - (1 - U_{min}/U_{max}) * (v/v_{max})^{\text{EXP}}).$$

Dabei stellt die Leistungskennlinie die geschwindigkeitsabhängig verfügbare Speicherleistung dar, nicht zu verwechseln mit der geschwindigkeitsabhängig zu entnehmenden Speicherleistung, die durch $I_{soll}$ bestimmt wird.

## Patentansprüche

1. Verfahren zum Betreiben eines Schienenfahrzeugs welches wenigstens einen elektrischen Energiespeicher zur Speicherung von Energie aufweist,

   wobei die Entladeleistung des Energiespeichers während des Betriebs des Schienenfahrzeugs mittels einer Regelung einstellbar ist, wobei die Entladeleistung durch einen Vergleich eines Ist-Ladezustandes (23) mit einem Soll-Ladezustand (25) des Energiespeichers in Abhängigkeit eines energetischen Zustands des Schienenfahrzeugs eingestellt wird,
   wobei der energetische Zustand des Schienenfahrzeugs durch wenigstens eine Zustandsgröße bestimmt wird,
   wobei die wenigstens eine Zustandsgröße ein Energieäquivalent des Schienenfahrzeugs ist,
   wobei der Soll-Ladezustand (25) des Energiespeichers in Abhängigkeit wenigstens eines Energieäquivalents bestimmt wird, wobei eine daraus resultierende Soll-Ladezustandskurve (32, 37, 42, 47) eine Funktion des wenigstens einen Energieäquivalents des Schienenfahrzeugs ist, **dadurch gekennzeichnet, dass** die Soll-Ladezustandskurve (32, 37, 42, 47) in Abhängigkeit einer Abweichung eines definierten Soll-Ladezustands (25) vom Ist-Ladezustand (23) des Energiespeichers bei Erreichen eines definierten Werts (21) des Energieäquivalents des Schienenfahrzeugs angepasst wird.

2. Verfahren nach Anspruch 1,
   **dadurch gekennzeichnet, dass**
   ein Energieäquivalent die Geschwindigkeit des Schienenfahrzeugs ist.

3. Verfahren nach einem der vorstehenden Ansprüche,
   **dadurch gekennzeichnet, dass**
   eine Soll-Ladezustandskurve (32, 37, 42, 47) einem Betriebsprofil des Schienenfahrzeugs entspricht, wobei jeweils unterschiedliche Betriebsprofile jeweils unterschiedlichen Soll-Ladezustandskurven entsprechen.

4. Verfahren nach einem der vorstehenden Ansprüche,
   **dadurch gekennzeichnet, dass**
   die Soll-Ladezustandskurven in einem Datenspeicher hinterlegt werden.

5. Verfahren nach einem der vorstehenden Ansprüche,
   **dadurch gekennzeichnet, dass**
   mittels des Vergleichs des Ist-Ladezustandes (23) mit dem Soll-Ladezustand (25) des Energiespeichers in Abhängigkeit des energetischen Zustands des Schienenfahrzeugs eine Entladesollleistung ableitbar ist.

6. Verfahren nach einem der vorstehenden Ansprüche,
   **dadurch gekennzeichnet, dass**
   die Entladesollleistung zu einer geregelten Energieentnahme aus dem Energiespeicher des Schienenfahrzeugs verwendbar ist.

7. Verfahren nach Anspruch 6,

**dadurch gekennzeichnet, dass**
die geregelte Energieentnahme aus dem Energiespeicher des Schienenfahrzeugs mittels einer geregelten Stromentnahme erfolgt.

**8.** Verfahren nach einem der vorstehenden Ansprüche,
**dadurch gekennzeichnet, dass**
die geregelte Energieentnahme aus dem Energiespeicher des Schienenfahrzeugs zum Beschleunigen des Schienenfahrzeugs verwendbar ist.

**9.** Verfahren nach einem der vorstehenden Ansprüche,
**dadurch gekennzeichnet, dass**
die Soll-Ladezustandskurve (32, 37, 42, 47) eine Funktion des wenigstens einen Energieäquivalents des Schienenfahrzeugs und wenigstens einer Störgröße ist.

**10.** Verfahren nach einem der vorstehenden Ansprüche,
**dadurch gekennzeichnet, dass**
die Soll-Ladezustandskurve (32, 37, 42, 47) in Abhängigkeit eines definierten Soll-Ladezustands (25) des Energiespeichers bei einer definierten Geschwindigkeit des Schienenfahrzeugs anpassbar ist.

**11.** Verfahren nach einem der vorstehenden Ansprüche,
**dadurch gekennzeichnet, dass**
die Steilheit der Soll-Ladezustandskurve (32, 37, 42, 47) in Abhängigkeit einer definierten Geschwindigkeit des Schienenfahrzeugs anpassbar ist.

**12.** Schienenfahrzeug mit zur Durchführung des Verfahrens nach einem der Ansprüche 1 bis 11 konfigurierten Mitteln.

**Claims**

**1.** Method for operating a rail vehicle which has at least one electrical energy storage unit for storing energy,

wherein the discharge capacity of the energy storage unit can be set during operation of the rail vehicle by means of a controller, wherein the discharge capacity is set by comparing an actual charging state (23) with a target charging state (25) of the energy storage unit as a function of an energy state of the rail vehicle,
wherein the energy state of the rail vehicle is determined by at least one state variable, wherein the at least one state variable is an energy equivalent of the rail vehicle,
wherein the target charging state (25) of the energy storage unit is determined as a function of at least one energy equivalent, wherein a target charging state curve (32, 37, 42, 47) resulting therefrom is a function of the at least one energy equivalent of the rail vehicle, **characterised in that** the target charging state curve (32, 37, 42, 47) is adjusted as a function of a variation in a defined target charging state (25) from the actual charging state (23) of the energy storage unit when adjustment of a defined value (21) of the energy equivalent of the rail vehicle is achieved.

**2.** Method according to claim 1,
**characterised in that**
an energy equivalent is the speed of the rail vehicle.

**3.** Method according to one of the preceding claims,
**characterised in that**
a target charging state curve (32, 37, 42, 47) corresponds to an operating profile of the rail vehicle, wherein in each case different operating profiles correspond in each case to different target charging state curves.

**4.** Method according to one of the preceding claims,
**characterised in that**
the target charging state curves are stored in a data storage unit.

**5.** Method according to one of the preceding claims,
**characterised in that**

a discharge target capacity can be derived by means of comparing the actual charging state (23) with the target charging state (25) of the energy storage unit as a function of the energy state of the rail vehicle.

6. Method according to one of the preceding claims,
   **characterised in that**
   the discharge target capacity can be used for a controlled energy withdrawal from the energy storage unit of the rail vehicle.

7. Method according to claim 6,
   **characterised in that**
   the controlled energy withdrawal from the energy storage unit of the rail vehicle is carried out by means of a controlled energy withdrawal.

8. Method according to one of the preceding claims,
   **characterised in that**
   the controlled energy withdrawal from the energy storage unit of the rail vehicle can be used to accelerate the rail vehicle.

9. Method according to one of the preceding claims,
   **characterised in that**
   the target charging state curve (32, 37, 42, 47) is a function of the at least one energy equivalent of the rail vehicle and at least one interference variable.

10. Method according to one of the preceding claims,
    **characterised in that**
    the target charging state curve (32, 37, 42, 47) can be adjusted as a function of a defined target charging state (25) of the energy storage unit with a defined speed of the rail vehicle.

11. Method according to one of the preceding claims,
    **characterised in that**
    the gradient of the target charging state curve (32, 37, 42, 47) can be adjusted as a function of a defined speed of the rail vehicle.

12. Rail vehicle with means configured to carry out the method according to one of claims 1 to 11.

**Revendications**

1. Procédé pour faire fonctionner un véhicule ferroviaire, qui comporte au moins un accumulateur d'énergie électrique pour accumuler de l'énergie,

   dans lequel la puissance de décharge de l'accumulateur d'énergie est réglable pendant le fonctionnement du véhicule ferroviaire au moyen d'une régulation, dans lequel on règle la puissance de décharge en comparant un état (23) de charge réelle à un état (25) de charge de consigne de l'accumulateur d'énergie en fonction d'un état énergétique du véhicule ferroviaire,
   dans lequel on détermine l'état énergétique du véhicule ferroviaire par au moins une grandeur d'état, dans lequel la au moins une grandeur d'état est un équivalent en énergie du véhicule ferroviaire,
   dans lequel on détermine l'état (25) de charge de consigne de l'accumulateur d'énergie en fonction d'au moins un équivalent d'énergie, dans lequel une courbe (32, 37, 42, 47) d'état de charge de consigne en résultant est une fonction du au moins un équivalent d'énergie du véhicule ferroviaire, **caractérisé en ce que** l'on adapte la courbe (32, 37, 42, 47) d'état de charge de consigne en fonction d'un écart d'un état (25) de charge de consigne défini à l'état (23) de charge réel de l'accumulateur d'énergie lorsqu'une valeur (21) définie de l'équivalence d'énergie du véhicule ferroviaire est atteinte.

2. Procédé suivant la revendication 1,
   **caractérisé en ce que**
   un équivalent d'énergie est la vitesse du véhicule ferroviaire.

11

**3.** Procédé suivant l'une des revendications précédentes,
**caractérisé en ce que**
une courbe (32, 37, 42, 47) d'état de charge de consigne correspond à un profil de fonctionnement du véhicule ferroviaire, dans lequel des profils de fonctionnement différents correspondent respectivement à des courbes d'état de charge de consigne différentes.

**4.** Procédé suivant l'une des revendications précédentes,
**caractérisé en ce que**
on met les courbes d'état de charge de consigne dans une mémoire de données.

**5.** Procédé suivant l'une des revendications précédentes,
**caractérisé en ce que**
au moyen de la comparaison de l'état (23) de charge réel à l'état (25) de charge de consigne de l'accumulateur d'énergie, on peut déduire, en fonction de l'état énergétique du véhicule ferroviaire, une puissance de consigne de décharge.

**6.** Procédé suivant l'une des revendications précédentes,
**caractérisé en ce que**
la puissance de consigne de décharge peut être utilisée pour un prélèvement régulé d'énergie de l'accumulateur d'énergie du véhicule ferroviaire.

**7.** Procédé suivant la revendication 6,
**caractérisé en ce que**
le prélèvement régulé d'énergie de l'accumulateur d'énergie du véhicule ferroviaire s'effectue au moyen d'un prélèvement régulé de courant.

**8.** Procédé suivant l'une des revendications précédentes,
**caractérisé en ce que**
le prélèvement régulé d'énergie de l'accumulateur d'énergie du véhicule ferroviaire peut être utilisé pour l'accélération du véhicule ferroviaire.

**9.** Procédé suivant l'une des revendications précédentes,
**caractérisé en ce que**
la courbe (32, 37, 42, 47) d'état de charge de consigne est une fonction du au moins un équivalent en énergie du véhicule ferroviaire et d'au moins une grandeur perturbatrice.

**10.** Procédé suivant l'une des revendications précédentes,
**caractérisé en ce que**
la courbe (32, 37, 42, 47) d'état de charge de consigne peut être adaptée en fonction d'un état (25) de charge de consigne défini de l'accumulateur d'énergie à une vitesse définie du véhicule ferroviaire.

**11.** Procédé suivant l'une des revendications précédentes,
**caractérisé en ce que**
la pente de la courbe (32, 37, 42, 47) d'état de charge de consigne peut être adaptée en fonction d'une vitesse définie du véhicule ferroviaire.

**12.** Véhicule ferroviaire comprenant des moyens configurés pour effectuer le procédé suivant l'une des revendications 1 à 11.

# FIG 1

# FIG 2

FIG 3

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10204215 A1

- DE 102008050737 A1